# EUROPEAN PATENT SPECIFICATION

(11) **EP 1 504 971 B1**
(45) Date of publication and mention of the grant of the patent: **10.09.2008**
(21) Application number: 04015858.6
(22) Date of filing: 06.07.2004
(51) Int. Cl.: B60R 22/46

(54) **Seat belt retractor**
Gurtaufroller für einen Sicherheitsgurt
Enrouleur de ceinture de sécurité

(30) Priority: 07.08.2003 JP 2003288579
(43) Date of publication of application: 09.02.2005
(73) Proprietor: TAKATA CORPORATION, Minato-ku, Tokyo 106-8510 (JP)
(72) Inventor: Inuzuka, Koji, Minato-ku Tokyo 106-8510 (JP); Tanaka, Koji, Minato-ku Tokyo 106-8510 (JP)
(74) Representative: Banzer, Hans-Jörg

(56) References cited:
- EP-A- 1 382 497
- WO-A-99/59848
- DE-A1- 10 141 240

## Description

### [Technical Field of the Invention]

The present invention pertains to a technical field of a seat belt retractor which is installed in a vehicle such as an automobile and which winds up a seat belt for restraining and protecting an occupant onto a spool with driving torque of a motor and, more particularly, to a technical field of a seat belt retractor in which a load torque from a spool larger than a predetermined value is prevented from being transmitted to a power transmission mechanism for transmitting the driving torque of a motor to the spool.

### [Background of the Invention]

Conventionally, a seat belt device installed in a vehicle such as an automobile prevents an occupant from jumping out of a vehicle seat by restraining the occupant with a seat belt thereof, thereby protecting the occupant in the event of emergency such as a vehicle collision at which large deceleration is exerted on the vehicle. The seat belt device is provided with a seat belt retractor which always biases a spool, on which the seat belt is wound, in the belt-winding direction and stops the rotation in the belt-unwinding direction of the spool because of the actuation of an emergency locking mechanism (ELR mechanism) in the event of emergency as mentioned above, thereby preventing the seat belt from being withdrawn.

Conventionally, as a seat belt retractor as mentioned above, a motorized retractor in which a spool is rotated by driving torque of a motor to wind up a seat belt has been proposed (for instance, see Japanese Utility Model Unexamined Publication S61-134465). In such a seat belt retractor, the tension of the seat belt can be controlled because the seat belt is wound up by the motor. Therefore, the use mode of the seat belt can be selected from various modes, thereby achieving more detailed restraint of an occupant by the seat belt according to conditions such as vehicle running conditions.

A further seat belt retractor according to the prior art is known from DE 101 41 240 A1, which discloses a seat belt retractor according to the preamble of claim 1.

### [Disclosure of the Invention]

### [Problems to be solved by the Invention]

By the way, in the conventional motorized seat belt retractor as disclosed in Japanese Utility Model Unexamined Publication S61-134465, belt tension may be exerted according to the withdrawal of the seat belt due to inertia of the occupant because such a deceleration not to actuate the locking of the ELR mechanism is generated, for example, by light collision during belt winding of the motor.

However, the load due to the energy of this belt tension is transmitted to a spool. As the load is transmitted to a power transmission mechanism via the spool when the motor rotates the spool in the belt winding direction, load torque larger than that in the normal state acts on components such as gears composing the power transmission mechanism. To make the components such as gears of the power transmission mechanism to withstand such large torque, the components are required to have larger proof strength. Since the load transmitted to the power transmission mechanism counters with the driving torque of the motor, the load on the motor is also increased.

The present invention was made under the aforementioned circumstances and an object of the present invention is to provide a seat belt retractor of a motor driven type which prevents a load torque larger than a predetermined value from acting on a power transmission mechanism during the driving of a motor.

### [Means to solve the Problems]

According to the present invention, this object is achieved by a seat belt retractor as defined in claim 1. The dependent claim defines a preferred and advantageous embodiment of the invention.

To solve the aforementioned problems, a seat belt retractor of the invention includes, at least, a spool for winding up a seat belt; a motor generating driving torque for rotating said spool; and a power transmission mechanism comprising a predetermined number of gears for transmitting the driving torque of said motor to said spool, wherein said seat belt is wound up onto said spool by the driving torque of the motor, and is characterized by further including a torque limiter mechanism for preventing a load torque exceeding a predetermined preset value from being transmitted to said power transmission mechanism.

In the seat belt retractor according to theinvention having the structure as mentioned above, the power transmission mechanism is prevented by the torque limiter mechanism from being subjected to a load torque exceeding the preset value when such a large load torque is about to be transmitted to the power transmission mechanism, for example, due to belt tension generated by that such a deceleration not to actuate the locking of the locking means as the ELR mechanism acts on the vehicle by light collision during the belt winding up motion of the motor. Therefore, the need to make the components of the power transmission mechanism such as gears to have very large proof strength can be eliminated. In addition, the load torque of the motor can be limited, thereby protecting the motor from excessive load torque.

The torque limiter mechanism comprises a clutch which interrupts the power transmission when the load torque exceeding said preset value is transmitted to said power transmission mechanism.

Because the torque limiter mechanism comprises the clutch, the torque limiter mechanism can be designed to have simple structure.

Furthermore, the clutch comprises motor-side ratchet teeth to which the driving torque of the motor is transmitted, and spool-side ratchet teeth which are disposed on the spool side of said power transmission mechanism and which normally engage said motor-side ratchet teeth to allow the power transmission and disengage said motor-side ratchet teeth to interrupt the power transmission when the load torque exceeding said preset value is transmitted.

Because the clutch comprises a pair of motor-side and spool side ratchet teeth which can engage with each other, the torque limiter mechanism can be designed to have further simple structure.

### [Brief Explanation of the drawings]

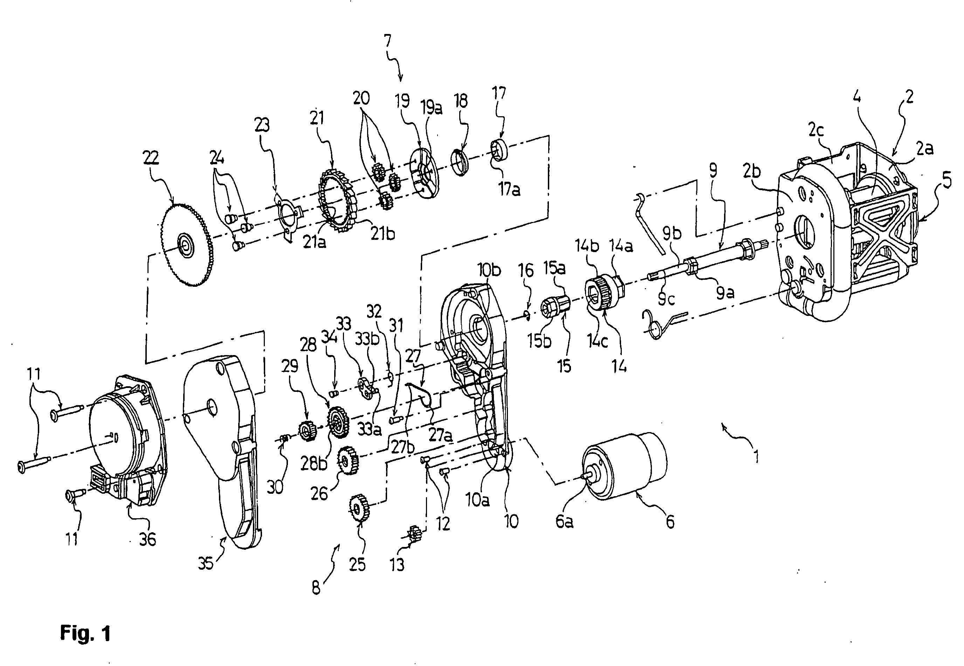

[Fig. 1] Fig. 1 is a perspective view showing an embodiment of a seat belt retractor according to the present invention.

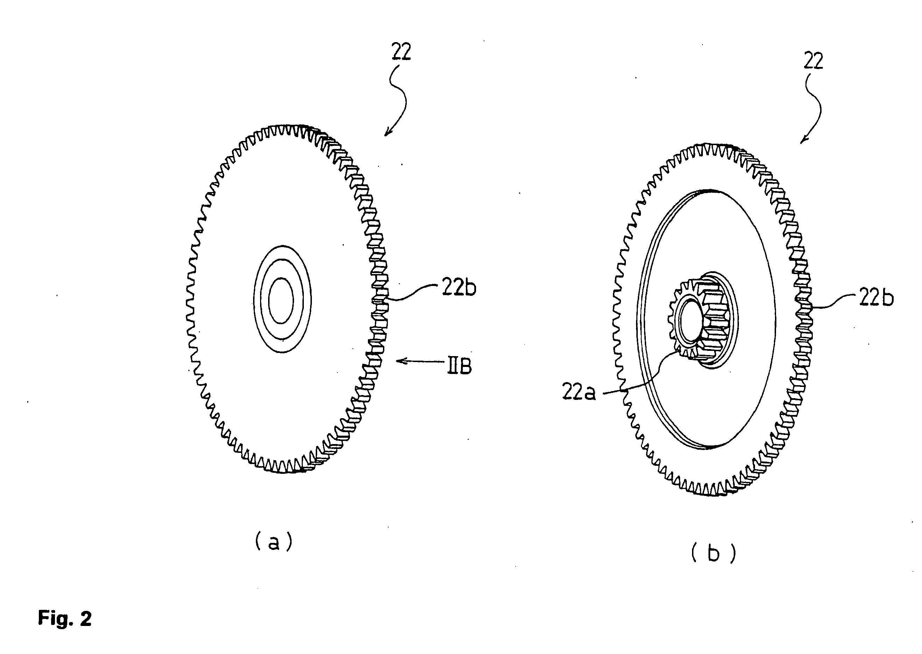

[Fig. 2] Figs. 2(a), 2(b) show a sun gear member of a power transmission mechanism in the seat belt retractor of the embodiment shown in Fig. 1, wherein Fig. 2(a) is a perspective view taken from one direction and Fig. 2(b) is a perspective view taken from a direction of arrow IIB of Fig. 2(a).

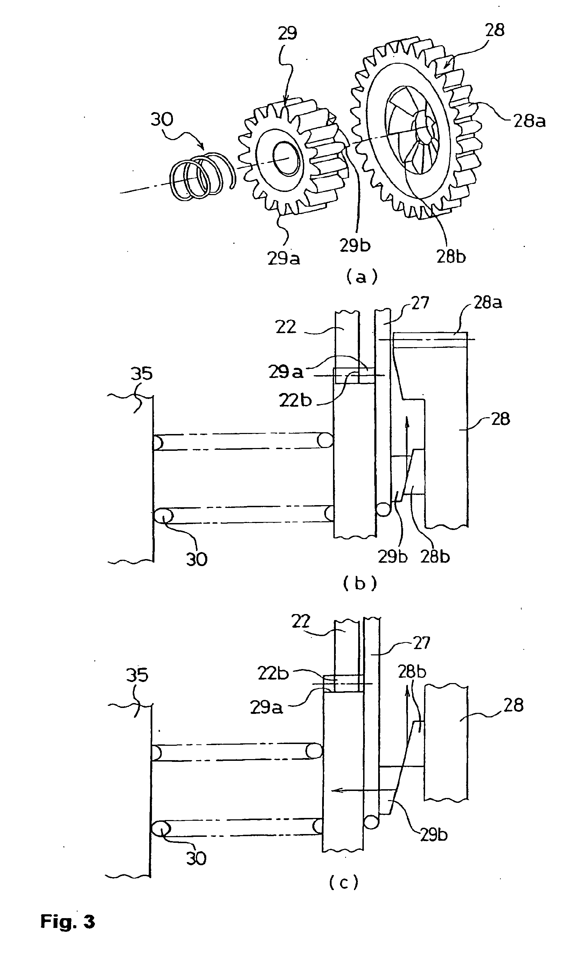

[Fig. 3] Figs. 3(a)-3(c) show a torque limiter mechanism of the seat belt retractor of the embodiment shown in Fig. 1, wherein Fig. 3 (a) is an exploded perspective view, Fig. 3(b) is an illustration schematically showing the torque limiter mechanism in a state allowing the power transmission, and Fig. 3(c) is an illustration schematically showing the torque limiter mechanism in a state isolating the power transmission.

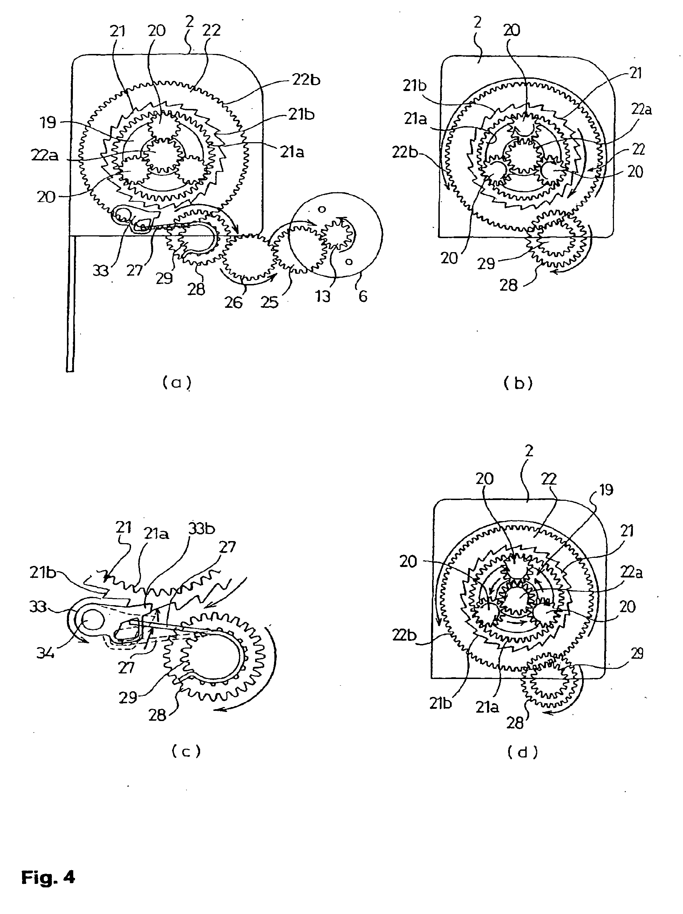

[Fig. 4] Figs. 4(a)-4(d) are illustrations for explaining the power transmission during belt winding-up motion of the seat belt retractor shown in Fig. 1, wherein Fig. 4(a) is an illustration for explaining the power transmission from a motor to an upper-side connecting gear, Fig. 4(b) is an illustration for explaining the power transmission from the upper connecting gear to a ring member, Fig. 4(c) is an illustration for explaining the stop of rotation of the ring member by the pawl member, and Fig. 4(d) is an illustration for explaining the power transmission to the carrier connected to a spool.

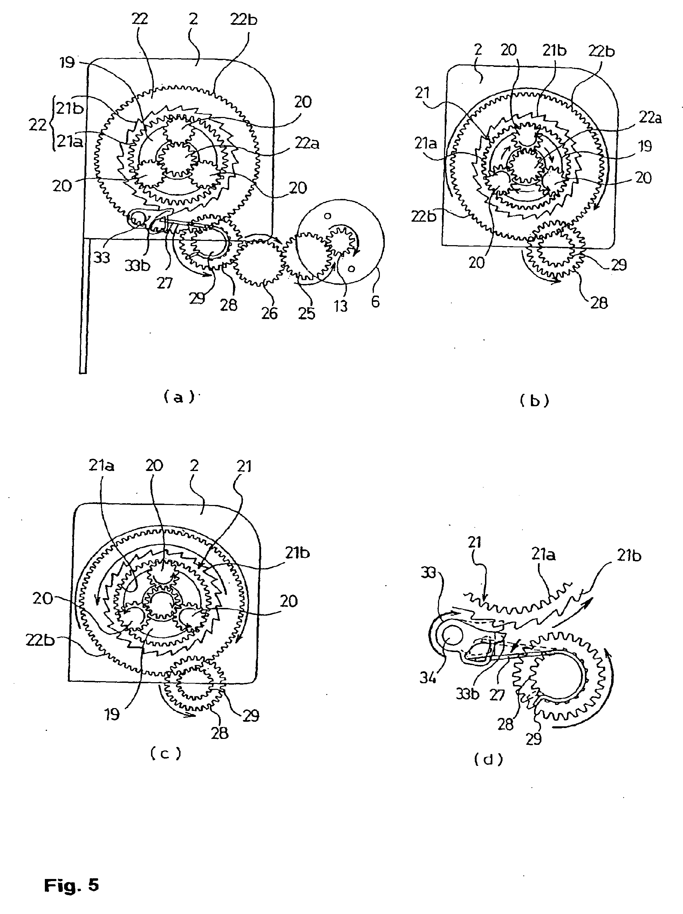

[Fig. 5] Figs. 5(a)-5(d) are illustrations for explaining the transmission of power in the belt unwinding direction when the stop of rotation of the ring member by the pawl member is cancelled in the seat belt retractor of the embodiment shown in Fig. 1, wherein Fig. 5(a) is an illustration for explaining the power transmission from the motor to the upper-side connecting gear, Fig. 5(b) is an illustration for explaining the power transmission from the upper-side connecting gear to the carrier, Fig. 5(c) is an illustration for explaining the power transmission to the ring member, and Fig. 5(d) is an illustration for explaining the cancellation of the stop of rotation of the ring member by the pawl member.

### [Best Modes for carrying out the Invention]

Hereinafter, the best modes for carrying out the present invention will be described with reference to the attached drawings.

Fig. 1 is a perspective view showing an embodiment of a seat belt retractor according to the present invention, Figs. 2(a), 2(b) show a sun gear member of a power transmission mechanism in the seat belt retractor of the embodiment shown in Fig. 1, wherein Fig. 2(a) is a perspective view taken from one direction and Fig. 2(b) is a perspective view taken from a direction of arrow IIB of Fig. 2(a). Figs. 3(a)-3(c) show a torque limiter mechanism of the seat belt retractor of the embodiment shown in Fig. 1, wherein Fig. 3 (a) is an exploded perspective view, Fig. 3(b) is an illustration schematically showing the torque limiter mechanism in a state allowing the power transmission, and Fig. 3(c) is an illustration schematically showing the torque limiter mechanism in a state isolating the power transmission. In the following description, " right" and "left" mean the right and the left in drawings used for explanation, and "clockwise" and "counterclockwise" mean "the clockwise" and "the counterclockwise" in drawings used for explanation unless stated.

As shown in Fig. 1, the seat belt retractor 1 of this embodiment generally comprises a frame 2, a seat belt 3 which restrains an occupant as needed, a spool 4 for winding up the seat belt 3, a locking means 5 as an ELR mechanism which is disposed on one side of the frame 2 and is actuated by large deceleration larger than a predetermined deceleration value generated at a collision or the like to stop the rotation of the spool 4 in the belt unwinding direction α, a motor 6 generating driving torque to be applied to the spool 4, a speed reduction mechanism 7 which reduces the speed of the rotation of the motor 6 in a power transmission path before being transmitted to the spool 4, and a power transmission gear mechanism (corresponding to the power transmission mechanism of the present invention) 8 which transmits the driving torque of the motor 6 to the spool 4 via the speed reduction mechanism 7.

The frame 2 comprises a pair of parallel side walls 2a, 2b, and a back plate 2c connecting these side walls 2a and 2b. Between the side walls 2a and 2b in the frame 2, the spool 4 for winding up the seat belt 3 is rotatably arranged. The spool 4 may be a spool which is conventionally well known to be used in seat belt retractors 1.

On one side wall 2a, the locking means 5 is mounted. Similarly, the locking means 5 may be a locking means which is conventionally well known to be used in seat belt retractors. That is, the locking means 5 is designed to be actuated to stop the rotation of the spool 4 in the belt unwinding direction α when a vehicle sensor (deceleration sensor) senses a large deceleration larger than a predetermined deceleration value acting on a vehicle or when a webbing sensor (belt withdrawing speed sensor) senses a speed higher than a predetermined speed of withdrawing the seat belt 3.

Arranged between the spool 4 and the locking means 5 is a torsion bar 9 of a force limiter mechanism (energy absorbing mechanism: hereinafter sometimes referred to as "EA mechanism") for limiting the load on the seat belt 3 when the withdrawing of the seat belt 3 is stopped by the actuation of the locking mechanism 5. The EA mechanism by the torsion bar 9 may be a conventionally well known EA mechanism. That is, when the withdrawing of the seat belt 3 is stopped by the actuation of the locking means 5, the torsion bar 9 is twisted and deformed according to the rotation of the spool 4 in the belt unwinding direction by the inertia of the occupant, thereby limiting the load on the seat belt 3 and absorbing impact energy.

On the other side wall 2b of the frame 2, a retainer 10 is mounted by three screws 11 as mentioned later. On the retainer 10 at its mounting side to the frame 2, the motor 6 is mounted by a pair of screws 12. The motor 6 has a rotary shaft 6a which extends through a through hole 10a of the retainer 10 and to which a motor gear 13 having external teeth is attached so that the motor gear 13 rotates together with the rotary shaft 6a.

Disposed between the spool 4 and a torque transmitting portion 9a of the torsion bar 9 is a pinion member 14 connecting the spool 4 and the torque transmitting portion 9a in the rotational direction. The pinion member has a rotational connecting portion 14a having a polygonal cylindrical shape (hexagonal cylindrical shape in the illustrated example). The outer periphery of the rotational connecting portion 14a is fitted into a bore (not shown) formed in the center of the spool 4 and having the same polygonal section (that is, the hexagonal section) so that the pinion member 14 rotates together with the spool 4. On the other hand, the torque transmitting portion 9a of the torsion bar 9 is fitted into the inner periphery of the rotational connecting portion 14a of the pinion member 14 so that the torque transmitting portion 9a rotates together with the pinion member 14.

The pinion member 14 has a pinion 14b formed on an end at the side opposite to the rotational connecting portion 14a. The pinion 14b is provided at its center with an axial bore 14c which is formed to have a polygonal section (a hexagonal section in the illustrated example) and into which a first rotational connecting portion 15a (formed in the same polygonal section as the axial hole 14c) of a connector 15 is fitted so that the connector 15 rotates together with the pinion member 14. The connector 15 has a second rotational connecting portion 15b formed on an end at the side opposite to the first rotational connecting portion 15a. The second rotational connecting portion 15b has the same polygonal section as the first rotational connecting portion 15a and is larger than the first rotational connecting portion 15a.

The connector 15 is fitted on an extension shaft 9b of the torsion bar 9 and a snap ring 16 is put to fall in a ring groove 9c of the extending shaft portion 9b, whereby stopping the axial movement of the connector 15 (that is, preventing the connector 15 from coming off). During this, the pinion member 14 is prevented from coming off the connector 15 because of the step between the first and second rotational connecting portions 15a and 15b of the connector 15.

A ring-like connector-side bush 17 has an inner periphery 17a which is formed to have a polygonal section which is the same as the section of the first rotational connecting portion 15a of the connector 15. The inner periphery 17a of the connector-side bush 17 is fitted on the first rotational connecting portion 15a so that the connector-side bush 17 is attached to the connector 15 not allowing the relative rotation therebetween. On the other hand, the retainer 10 has a hole 10b in which a ring-like retainer-side bearing 18 is fitted such that the retainer-side bearing 18 is not allowed to rotate relative to the retainer 10. The connector-side bush 17 is supported by the retainer-side bearing 18 in such a manner as to allow the relative rotation therebetween, whereby the connector 15 is rotatably supported by the retainer 10.

The speed reduction mechanism 7 comprises a carrier 19 composed of a ring-like disk, a predetermined number of (three in the illustrated example) planet gears 20, an annular ring member 21, and a sun gear member 22.

The carrier 19 has an inner periphery 19a which is formed to have the polygonal section as the second rotational connecting portion 15b of the connector 15. The inner periphery 19a of the carrier is fitted on the second rotational connecting portion 15b so that the carrier 19 is attached to the connector 15 not allowing the relative rotation therebetween (that is, the carrier 19 rotates together with the connector 15). In this case, the carrier 19 is positioned between the step formed by the first and second rotational connecting portions 15a, 15b and the pinion member 14.

The planet gears 20 are rotatably attached to the carrier 19 through a speed reduction plate 23 by a predetermined number of (three in the illustrated example) speed reduction pins 24.

The ring member 21 has an internal gear 2 1 a formed in the inner periphery thereof and a ratchet gear 21 b formed in the outer periphery thereof. The internal gear 21a and the ratchet gear 21 b rotate together with each other.

The sun gear member 22 has a sun gear 22a composed of a small-diameter external gear and a large-diameter external gear 22b which rotate together with each other as shown in Figs. 2(a), 2(b).

The planet gears 20 supported by the carrier 19 is always in mesh with the sun gear 22a and with the internal gear 21a, thereby forming a planetary gear train. The speed reduction mechanism 7 is the planetary gear train of which input is the sun gear 22a and output is the carrier 19.

As shown in Fig. 1, the power transmission mechanism 8 comprises a pair of idle gears 25, 26, a clutch spring 27, a lower-side connecting gear 28, an upper-side connecting gear 29, a limiter spring 30, a limiter pin 31, an initial spring 32, a clutch pawl 33, and a clutch pawl pin 34.

The pair of idle gears 25, 26 are rotatably mounted on the retainer 10 in such a manner that they are in mesh with each other. One idle gear 25 is in mesh with the motor gear 13 and the other idle gear 26 is in mesh with external teeth 28a of the lower-side connecting gear 28.

The lower-side connecting gear 28 and the upper-side connecting gear 29 are rotatably mounted on the retainer 10. In this case, the lower-side and upper-side connecting gears 28 and 29 can rotate relative to each other. The upper-side connecting gear 29 is movably disposed so that it can come in contact with or depart from the lower-side connecting gear 28 in the axial direction. As shown in Fig. 3(a), the lower-side connecting gear 28 has ratchet teeth 28b formed in the motor side at its center and the upper-side connecting gear 29 has ratchet teeth 29b formed in the spool 4 side at its center. The ratchet teeth 29b can engage the ratchet teeth 28b of the lower-side connecting gear 28. The upper-side connecting gear 29 is always biased toward the lower-side connecting gear 28 by the limiter spring 30.

Accordingly, in the normal state that the load torque in the belt unwinding direction to be transmitted to the upper-side connecting gear 29 is lower than a predetermined preset value because of the set load of the limiter spring 30, the ratchet teeth 28b and 29b engage each other as shown in Fig. 3(b) so that the driving torque of the motor 6 is transmitted from the lower-side connecting gear 28 to the upper-side connecting gear 29. During this, forces act on the ratchet teeth 29b in such an axial direction as to depart from the ratchet teeth 28b. However, since the aforementioned load torque is smaller than the preset value, the limiter spring 30 is not compressed so as to hold the engagement between the ratchet teeth 28b and 29b.

When the aforementioned load torque exceeds the aforementioned preset value, the ratchet teeth 28b slip over the slopes of the ratchet teeth 29b so that the lower-side connecting gear 28 rotate relative to the upper-side connecting gear 29 as shown in Fig. 3(c). Because of this relative rotation, the upper connecting gear 29 moves in the axial direction away from the lower connecting gear 28 with compressing the limiter spring 30. Therefore, the engagement between the ratchet teeth 28b and 29b is cancelled so that the upper connecting gear 29 is never subjected to a load torque exceeding the preset value. Accordingly, the load torque of the motor 6 is limited to be smaller than the preset value, thus protecting the motor 6 from excessive load torque. In this manner, a clutch composed of the ratchet teeth 28b, the ratchet teeth 29b, and the limiter spring 30 forms the torque limiter mechanism of the present invention.

The upper connecting gear 29 is in mesh with the external teeth 22b of the sun gear member 22.

As shown in Fig. 4(c), the clutch spring 27 has a curved portion 27a which is partially wound around the outer periphery of the external teeth 29b of the upper connecting gear 29. The other end portion 27b of the clutch spring 27 is engaged with an engaging pin 33a of the clutch pawl 33.

The clutch pawl 33 is pivotally attached to the retainer 10 by the clutch pawl pin 34 such that an engaging tooth 33b of the tip of the clutch pawl 33 can engage with one of the ratchet teeth 21b of the ring member 21 rotating in a rotational direction corresponding to the belt winding direction of the spool 4. The clutch pawl 33 is always biased in such a direction as to depart from the ratchet teeth 21 b by the initial spring 32.

In the state that the respective components of the power transmitting gear train 8 are assembled in a concave portion formed in a face of the retainer 10 opposite to the face which is attached to the frame 2, a retainer cover 35 is put on the face on which the respective components are assembled and a T/RD cassette 36 is further put on the retainer cover 35. In this state, the retainer 10, the retainer cover 35, and the T/RD cassette 36 are tightened together and fixed to the side wall 2b of the frame 2 by three screws 11.

Hereinafter, the action of the seat belt retractor 1 of this embodiment will be described.

In the state that the seat belt 3 is not in use, the seat belt 3 is completely wound up onto the spool 4 by the driving torque of the motor 6 and is thus accommodated in the seat belt retractor 1. The action of winding up the seat belt 3 by the motor 6 will be described in later. In this state, the motor 6 is stopped and the clutch pawl 33 is spaced apart from the ring member 21 because of the spring force of the initial spring 32 so that the ring member 21 is freely rotatable. In addition, the upper-side connecting gear 29 is positioned because of the spring force of the limiter spring 30 such that the ratchet teeth 29b can engage the ratchet teeth 28b of the lower-side connecting gear 28.

As the seat belt 3 is withdrawn from the seat belt retractor 1 for the use of the seat belt 3 by an occupant, the spool 4 rotates in the belt unwinding direction. During this, since the ring member 21 is freely rotatable, the rotation of the spool 4 is not transmitted to the motor 6 side so that the spool 4 can lightly rotate. Therefore, the seat belt 3 is smoothly withdrawn.

After the seat belt 3 is withdrawn, a tongue is inserted into and latched to a buckle, whereby the buckle switch is turn on to allow the driving of the motor 6.

As the motor 6 is driven in the rotational direction corresponding to the belt winding direction of the spool 4, the rotational force of the motor 6 is transmitted to the planet gears 20 through the motor gear 13, the pair of idle gears 25, 26, the lower-side connecting gear 28, the upper-side connecting gear 29, and the sun gear member 22 so that the planet gears 20 rotate in the clockwise direction on their axes. During this, since the load torque in the belt winding direction to be transmitted to the upper-side connecting gear 29 is smaller than the preset value, the ratchet teeth 28b of the lower-side connecting gear 28 and the ratchet teeth 29b of the upper-side connecting gear 29 engage each other so that the clutch composed of the teeth 28b and 29b is turned ON. Therefore, the driving torque of the motor 6 is securely transmitted from the lower-side connecting gear 28 to the upper-side connecting gear 29. Since the ring member 21 is freely rotatable, the ring member 21 rotates in the clockwise direction according to the rotation of the planet gears 20 as shown in Fig. 4(b). The planet gears 20 rotate on their axes but do not orbitally rotate.

On the other hand, at the same time, the upper-side connecting gear 29 rotates in the clockwise direction so that the clutch spring 27 also pivots about the upper-side connecting gear 29 in the clockwise direction. Then, the tip of the clutch spring 27 moves the clutch pawl 33 to pivot about the clutch pawl pin 34 in the counterclockwise direction so as to move the engaging tooth 33b to the engaging position where the engaging tooth 33b can engage one of the ratchet teeth 21b. Since the ring member 21 rotates in the clockwise direction, one of the ratchet teeth 21b engages with the engaging tooth 33b as shown in Fig. 4(c) so that the clutch composed of the ratchet teeth 21b and the engaging tooth 33b is turned ON, thereby stopping the rotation of the ring member 21.

As the ring member 21 is stopped, the planet gears 20 orbitally rotate around the sun gear 22a in the counterclockwise direction while the planet gears 20 rotate on their axes as shown in Fig. 4(d). The orbital rotation of the planet gears 20 rotates the carrier 19 in the counterclockwise direction. In this manner, the rotation of the sun gear member 22 is outputted as the rotation of the carrier 19 after the speed of the rotation is reduced by the planetary gear train. Further, the rotation of the carrier 19 is transmitted to the spool 4 through the connector 15 and the pinion 14, whereby the spool 4 rotates in the belt winding direction. Therefore, the seat belt 3 is wound up.

Then, as shown in Fig. 5(a), the motor 6 is driven in the clockwise direction (corresponding to the belt unwinding direction of the spool 4). The rotation of the motor 6 is transmitted to the planet gears 20 through the motor gear 13, the pair of idle gears 25, 26, the lower-side connecting gear 28, the upper-side connecting gear 29, and the sun gear member 22 so that the planet gears 20 rotate in the counter-clockwise direction on their axes as shown in Fig. 5(b). The carrier 19 is biased in the belt unwinding direction due to the belt tension exerted on the seat belt 3 so that the carrier 19 rotate in the clockwise direction (corresponding to the belt unwinding direction) by the rotation of the planet gears 20 in the counterclockwise direction. However, since the biasing force on the carrier 19 in the belt unwinding direction due to the aforementioned belt tension is reduced according to the rotation of the carrier 19 in the belt unwinding direction, the rotation of the carrier 19 is stopped soon.

Then, by the rotation of the planet gears 20 in the counterclockwise direction, the ring member 21 is rotated in the counterclockwise direction through the internal gear 21a as shown in Fig. 5(c). The rotation of the ring member 21 reduces the engaging force between the one of the ratchet teeth 21b of the ring member 21 and the engaging tooth 33b of the clutch pawl 33. In this state, by the rotation of the upper-side connecting gear 29 in the counterclockwise direction, the clutch spring 27 wound around the upper-side connecting gear 29 pivots about the upper-side connecting gear 29 in the counterclockwise direction together with the upper-side connecting gear 29 as shown in Fig. 5(d). Accordingly, the tip of the clutch spring 27 moves the clutch pawl 33 to pivot about the clutch pawl pin 34 in the clockwise direction to the non-engaging position i.e. the initial position where the engaging tooth 33b is out of mesh with the ratchet teeth 21b of the ring member 21. Therefore, the engagement between the engaging tooth 33b and the one of the ratchet teeth 21 b is cancelled. That is, the clutch composed of the engaging tooth 33b and the ratchet teeth 21 b is turned OFF so that the ring member 21 is returned to the initial state, i.e. to be freely rotatable.

By the way, as a large load torque is exerted on the upper-side connecting gear 29 for some reason caused on the spool 4 side from the upper-side connecting gear 29, for example, as the belt tension is exerted because such a deceleration not to actuate the locking of the locking means 5 as the ELR mechanism is generated on the vehicle by light collision during winding up the seat belt 3 by the driving of the motor 6, the load torque of the lower-side connecting gear 28 to rotate the upper connecting gear 29 by transmitted driving torque of the motor 6 is increased and the load of the motor 6 is also increased. As the load torques of the upper- and lower-side connecting gears 29, 28 exceeds the preset values, however, the engagement between the ratchet teeth 28b and 29b is cancelled so that the clutch composed thereof is turned OFF as shown in Fig. 3(c), thereby interrupting the power transmission. In this manner, the components of the power transmission mechanism are never subjected to a load torque exceeding the preset value and the load torque of the motor 6 is limited not to exceed the preset value, thereby protecting the motor 6 from excessive load torque.

The seat belt retractor 1 of this embodiment structured as mentioned above is provided with the torque limiter mechanism whereby the power transmission mechanism is prevented from being subjected to a load torque exceeding the preset value when such a large load torque is about to be transmitted to the power transmission mechanism, for example, due to the belt tension generated by that such a deceleration not to actuate the locking of the locking means 5 as the ELR mechanism is generated on the vehicle by light collision during the belt winding up motion of the motor 6. Therefore, the need to make the components of the power transmission mechanism such as gears to have large proof strength can be eliminated. In addition, the load torque of the motor 6 can be limited, thereby protecting the motor 6 from excessive load torque.

Particularly, since the torque limiter mechanism is the clutch composed of the motor-side ratchet teeth 28b, the spool-side ratchet teeth 29b, and the limiter spring 30, the torque limiter mechanism can be designed to have simple structure.

### [Industrial Applicability]

The seat belt retractor of the present invention is suitably adopted to a seat belt device, installed to a seat of a vehicle such as an automobile, for restraining and protecting an occupant.

## Claims

1. A seat belt retractor, comprising
a spool (4) for winding up a seat belt (3);
a motor (6) generating driving torque for rotating said spool (4); and
a power transmission mechanism (8) comprising a predetermined number of gears for transmitting the driving torque of said motor (6) to said spool (4),
wherein said seat belt (3) is wound up onto said spool (4) by the driving torque of the motor (6),
**characterized in that**
the seat belt retractor (1) further comprises a torque limiter mechanism (28b, 29b, 30) for preventing a load torque from the spool (4) to the power transmission mechanism (8) exceeding a predetermined preset value from being transmitted to said power transmission mechanism (8),
wherein said torque limiter mechanism (28b, 29b, 30) comprises a clutch which interrupts the power transmission when the load torque exceeding said preset value is transmitted to said power transmission mechanism (8), and
wherein said clutch (28b, 29b, 30) comprises motor-side ratchet teeth (28b) to which the driving torque of the motor (6) is transmitted, and spool-side ratchet teeth (29b) which are disposed on the spool side of said power transmission mechanism (8) and which normally engage said motor-side ratchet teeth (28b) to allow the power transmission and disengage said motor-side ratchet teeth (28b) to interrupt the power transmission when the load torque exceeding said preset value is transmitted.

2. A seat belt device comprising the seat belt retractor (1) according to claim 1.

## Patentansprüche

1. Sitzgurtaufrollvorrichtung umfassend
eine Spule (4), um einen Sitzgurt (3) aufzuwickeln;
einen Motor (6), um ein Drehmoment zu erzeugen, um die Spule (4) zu drehen; und
einen Leistungsübertragungsmechanismus (8), welcher eine vorbestimmte Anzahl von Antrieben umfasst, um das Drehmoment des Motors (6) auf die Spule (4) zu übertragen,
wobei der Sitzgurt (4) durch das Drehmoment des Motors (6) auf die Spule (4) aufgewickelt wird,
**dadurch gekennzeichnet,**
**dass** die Sitzgurtaufrollvorrichtung (1) darüber hinaus einen Momentbegrenzungsmechanismus (28b, 29b, 30) umfasst, um zu verhindern, dass ein Lastmoment, welches von der Spule (4) auf den Leistungsübertragungsmechanismus (8) übertragen wird, einen vorbestimmten eingestellten Wert überschreitet,
wobei der Momentbegrenzungsmechanismus (28b, 29b, 30) eine Kupplung umfasst, welche die Leistungsübertragung, die zu dem Leistungsübertragungsmechanismus (8) übertragen wird, unterbricht, wenn das Lastmoment den eingestellten Wert überschreitet, und
wobei die Kupplung (28b, 29b, 30) umfasst Zähne (28b) auf einer Motorseite, auf welche das Drehmoment des Motors (6) übertragen wird, und Zähne (29b) auf einer Spulenseite, welche auf der Spulenseite des Leistungsübertragungsmechanismus (8) angeordnet sind und welche sich normalerweise mit den Zähnen (28b) auf der Motorseite in Eingriff befinden, um die Leistungsübertragung zu ermöglichen, und welche aus einem Eingriff mit den Zähnen (28b) auf der Motorseite gebracht werden, um die Leistungsübertragung zu unterbrechen, wenn das Lastmoment, welches den eingestellten Wert überschreitet, übertragen wird.

2. Sitzgurtvorrichtung, welche die Sitzgurtaufrollvorrichtung (1) nach Anspruch 1 umfasst.

## Revendications

1. Un enrouleur de ceinture de sécurité comprenant
une bobine (4) pour enrouler une ceinture de sécurité (3) ;
un moteur (6) générant un couple d'entraînement pour faire tourner ladite bobine (4) ; et
un mécanisme (8) de transmission de puissance comprenant un nombre prédéterminée de vitesses pour transmettre le couple d'entraînement dudit moteur (6) à ladite bobine (4),
ladite ceinture de sécurité (3) étant enroulée sur ladite bobine (4) par le couple d'entraînement du moteur (6),
**caractérisé en ce que**
l'enrouleur (1) de ceinture de sécurité comprend en outre un mécanisme (28b, 29b, 30) de limitation de couple pour empêcher un couple résistant depuis la bobine (4) vers le mécanisme (8) de transmission de puissance excédant une valeur préréglée prédéterminée d'être transmis vers ledit mécanisme (8) de transmission de puissance,
ledit mécanisme (28b, 29b, 30) de limitation de couple comprenant un embrayage qui interrompt la transmission de puissance quand le couple résistant excédant ladite valeur préréglée est transmis vers ledit mécanisme (8) de transmission de puissance, et
ledit embrayage (28b, 29b, 30) comprenant des dents (28b) de type cliquet du côté moteur auxquelles le couple d'entraînement du moteur (6) est transmis, et des dents (29b) de type cliquet du côté bobine qui sont disposées du côté bobine dudit mécanisme (8) de transmission de puissance et qui engagent normalement lesdites dents (28b) de type cliquet du côté moteur pour permettre la transmission de puissance et désengagent lesdites dents (28b) de type cliquet du côté moteur pour interrompre la transmission de puissance quand le couple résistant excédant ladite valeur préréglée est transmis.

2. Un dispositif de ceinture de sécurité comprenant l'enrouleur (1) de ceinture de sécurité selon la revendication 1.
